# EUROPEAN PATENT APPLICATION

(11) **EP 2 022 807 A1**
(43) Date of publication of application: **11.02.2009**
(21) Application number: 07744314.1
(22) Date of filing: 29.05.2007
(51) Int. Cl.: C08G 63/78, C08K 3/10, C08K 5/521, C08L 67/00

(54) **PROCESS FOR PRODUCTION OF POLYESTER BLOCK COPOLYMER**

(30) Priority: 01.06.2006 JP 2006154067; 21.11.2006 JP 2006314903
(71) Applicant: Daicel Chemical Industries, Ltd., Kita-ku Osaka-shi Osaka 530-0001 (JP)
(72) Inventor: SAKANE, Masanori, Ohtake-shi Hiroshima 739-0601 (JP)
(74) Representative: Grünecker, Kinkeldey, Stockmair & Schwanhäusser Anwaltssozietät
(86) International application number: PCT/JP2007/060894
(87) International publication number: WO 2007/139104

(57) **Abstract**

Disclosed is a method which produces a polyester block copolymer by continuously feeding a molten crystalline aromatic polyester (A) through a gear pump and (B1) or a lactone composition (B2) through a metering pump into a static mixer respectively at constant rates; and carrying out a reaction between the two components to give the polyester block copolymer. In this method, the crystalline aromatic polyester (A) is preferably fed so as to give an inlet pressure of the gear pump of 0.0098 MPa (gauge pressure) or more, and the charge pressure of the lactone (B1) or the lactone composition (B2) is preferably controlled to be 1.96 MPa (gauge pressure) or more. According to the method, a polyester block copolymer with constant quality can be industrially efficiently produced through the reaction of a crystalline aromatic polyester with a lactone.

## Description

### Technical Field

The present invention relates to a method for producing polyester block copolymers. More specifically, it relates to a method for continuously producing polyester block copolymers, which method can yield polyester block copolymers always with constant quality. The polyester block copolymers are used as materials typically for fibers, molded articles, and films.

### Background Art

Japanese Unexamined Patent Application Publication (JP-A) No. Sho 61-281124 and JP-A No. Sho 61-283619 disclose methods for producing elastic polyesters by continuously feeding a molten crystalline aromatic polyester and a lactone to a reactor tank and carrying out addition polymerization between them. According to these methods, however, it takes a long time to carry out the reaction, whereby an aromatic polyester constituting hard segments and a polylactone constituting soft segments partially undergo transesterification with each other and resulting randomization, to give only elastic polyesters that have largely varying melting points and/or largely varying mechanical strengths.

JP-A No. Hei 05-93050 discloses a "continuous stirred-tank reactor (CSTR) continuous production method" in which two or more stirred tanks are connected in series, and a lactide is continuously fed thereto to carry out polymerization. This method employs a reactor having dynamic stirrers. However, when a lactone is polymerized according to this method, the resulting polymer has a much increasing viscosity in a range of 10000 poises or more with an increasing average molecular weight thereof, this makes it difficult to stir the reaction mixture with normal stirrers and to recover the reaction product from the reactor. Even if stirring of the reaction system is conducted by using high-power stirrers and designing mixing impellers appropriately, the reaction mixture moves in a laminar flow-like manner with the rotation of the mixing impellers, and this makes it difficult to stir the entire system uniformly. Additionally, the ring-opening polymerization of a cyclic ester is attended with heat generation, but the temperature control in the reactor tank becomes difficult, because an increasing viscosity of the reaction mixture impedes uniform stirring of the reaction mixture. The insufficient temperature control may cause uncontrolled excursion in the reaction or cause a temperature distribution in the polymer, and the resulting local heating may often cause deteriorated quality of the polymer. However, this document neither teaches nor indicates any solution to these problems in continuous production of high-molecular-weight polyester polymers from lactides or lactones, in which the reaction products have increased viscosities to impede uniform stirring and heat removal.

JP-A No. Hei 07-26001 discloses a method for continuously producing a biodegradable polyester polymer by continuously feeding one or more lactones and a cyclic ester formed between two molecules of a hydroxycarboxylic acid to a continuous reactor equipped with a static mixer, and carrying out ring-opening polymerization of these components. JP-A No. Hei 07-149878 discloses a method for producing a lactone copolymer by reacting a lactone (A) with a polyester (B) containing repeating units between an aromatic dicarboxylic acid component and a diol component and other repeating units between an aliphatic dicarboxylic acid component and a diol component as essential components, in the presence of a ring-opening polymerization catalyst (C). These methods are effective in polymerization of low-viscosity liquid monomers alone. However, in copolymerization between a high-viscosity molten polymer and a low-viscosity liquid monomer, it is difficult by these methods to feed the two or more different raw materials continuously in precise proportions, and the continuously prepared polyester block copolymers show large variations in their properties .

[Patent Document 1] JP-A No. Sho 61-281124
[Patent Document 2] JP-A No. Sho 61-283619
[Patent Document 3] JP-A No. Hei 05-93050
[Patent Document 4] JP-A No. Hei 07-26001
[Patent Document 5] JP-A No. Hei 07-149878

### Disclosure of Invention

### Problems to be Solved by the Invention

Accordingly, an object of the present invention is to provide a method for industrially efficiently producing a polyester block copolymer with constant quality in the production of a polyester block copolymer through the reaction of a crystalline aromatic polyester with a lactone. Means for Solving the Problems

After intensive investigations to achieve the object, the present inventors have found that uniformity of a reaction can be maintained and thereby a polyester block copolymer with constant quality can be efficiently produced even though two compounds having significantly different melt viscosities are used as raw materials, by continuously feeding a molten crystalline aromatic polyester through a gear pump and a lactone through a metering pump into a static mixer respectively at constant rates. The present invention has been made based on these findings.

Specifically, the present invention provides a method for producing a polyester block copolymer. The method includes the steps of continuously feeding a molten crystalline aromatic polyester (A) through a gear pump and a lactone (B1) or a lactone composition (B2) through a metering pump into a static mixer respectively at constant rates; and carrying out a reaction between the two components to give the polyester block copolymer.

In this production method, a crystalline aromatic polyester (A1) having an acid value of greater than 2 mg-KOH/g may be reacted with the lactone (B1); and a crystalline aromatic polyester (A2) having an acid value of 2 mg-KOH/g or less may be reacted with the lactone composition (B2).

The lactone composition (B2) may be a composition containing a lactone (B1) and a phosphorous ester compound (C). In this case, the lactone composition (B2) may further contain at least one compound selected from the group consisting of acidic phosphoric esters (D) and tin compounds (E).

In the production method, the crystalline aromatic polyester (A) is preferably fed so as to give an inlet pressure of the gear pump of 0.0098 MPa (gauge pressure) or more; and the charge pressure of the lactone (B1) or the lactone composition (B2) is preferably controlled to be 1.96 MPa (gauge pressure) or more.

### Advantages

In the production method according to the present invention, a molten crystalline aromatic polyester (A) is fed through a gear pump and a lactone (B1) or a lactone composition (B2) is fed through a metering pump into a static mixer respectively at constant rates, and a reaction between the two components is carried out. Thus, the copolymerization reaction can be conducted always at a constant copolymerization ratio and a constant reaction rate (conversion) to thereby continuously give a polyester block copolymer with constant quality industrially efficiently, without conducting mixing of the product for averaging the quality thereof. The method according to the present invention is therefore particularly useful in continuous production of such polyester block copolymers that have significantly varying properties depending on the copolymerization ratio and/or the reaction rate. Best Modes for Carrying Out the Invention

### [Crystalline Aromatic Polyester (A)]

Crystalline aromatic polyesters (A) for use in the present invention are each a polyester between an acid component (a) (dicarboxylic acid component) and a diol component (b), are each a polymer mainly having ester bonds, and have a terminal hydroxyl group in the molecule. The acid component (a) is composed of an aromatic dicarboxylic acid as an essential component, and an aliphatic dicarboxylic acid and/or an alicyclic dicarboxylic acid added according to necessity. The diol component (b) is composed of at least one of an aliphatic diol, an aromatic diol, and an alicyclic diol.

The crystalline aromatic polyesters (A) are preferably polyesters having a high degree of polymerization and a melting point of 160°C or higher (e.g., about 160°C to about 285°C). When the products are used as molding materials, the crystalline aromatic polyesters (A) preferably have a number-average molecular weight (in terms of poly (methyl methacrylate)) of 5, 000 or more (e.g., about 5,000 to about 100,000).

Exemplary acid components (a) for constituting crystalline aromatic polyesters (A) include aromatic dicarboxylic acids, aliphatic dicarboxylic acids, and alicyclic dicarboxylic acids. Exemplary aromatic dicarboxylic acids include terephthalic acid, isophthalic acid, 2,6-naphthalenedicarboxylic acid, and biphenyldicarboxylic acid. Exemplary preferred aliphatic dicarboxylic acids include dicarboxylic acids each having two to twenty carbon atoms, such as succinic acid, glutaric acid, adipic acid, azelaic acid, sebacic acid, dodecanedioic acid, and dimer acids. Exemplary alicyclic dicarboxylic acids include 1,4-cyclohexanedicarboxylic acid. These dicarboxylic acids, if used as raw materials, may be in the form of esters, acid chlorides, and/or cyclic acid anhydrides. Each of different acid components (a) may be used alone or in combination.

Among them, at least terephthalic acid is preferably used as an acid component (a). Terephthalic acid is more preferably used in an amount of 60 percent by mole or more, and further preferably used in an amount of 80 percent by mole or more, of the total acid components (a).

Exemplary diol components (b) for constituting crystalline aromatic polyesters (A) include aliphatic glycols, aromatic diols, and alicyclic diols. Exemplary aliphatic glycols include 1,4-butanediol, 1,3-butanediol, 1,2-butanediol, ethylene glycol, propylene glycol, 1,3-propane diol, 1,5-pentanediol, 3-methyl-1,5-pentanediol, 1,6-hexanediol, 1,9-nonanediol, neopentyl glycol, and polymethylene glycols. Exemplary aromatic diols include resorcinol, naphthalenediol, and 2,2-bis(4-hydroxyphenyl)propane; and adducts of bisphenol-A with an alkylene oxide such as ethylene oxide or propylene oxide, including 2,2-bis(4-hydroxyethoxyphenyl)propane, 2,2-bis(4-hydroxydiethoxyphenyl)propane, 2,2-bis(4-hydroxytriethoxyphenyl)propane, and 2,2-bis(4-hydroxypolyethoxyphenyl)propane. Exemplary alicyclic diols include 1,4-cyclohexanediol, 1,4-cyclohexanedimethanol, and 2,2-bis(4-hydroxyethoxycyclohexyl)propane; and adducts of hydrogenated bisphenol-A with an alkylene oxide such as ethylene oxide or propylene oxide. Each of different diol components (b) may be used alone or in combination.

Among them, at least one selected from 1,4-butanediol and ethylene glycol is preferably used as a diol component (b). More preferably 1, 4-Butanediol and ethylene glycol are used in a total amount of 60 percent by mole or more, and further preferably used in a total amount of 80 percent by mole or more, of the total diol components (b).

Each of different crystalline aromatic polyesters (A) may be used alone or in combination.

Among these crystalline aromatic polyesters (A), aromatic polyesters containing at least one of a butylene terephthalate unit and an ethylene terephthalate unit are preferred, of which those containing a total of 60 percent by mole or more of these units are more preferred, in consideration of crystallinity, thermal stability, or material cost.

According to the present invention, a polyester block copolymer is produced by continuously feeding a crystalline aromatic polyester (A) and a lactone (B1) or a lactone composition (B2) into a static mixer respectively at constant rates and carrying out a reaction between them. For the continuous production of a polyester block copolymer superior in hue (color) and thermal stability, it is preferred that a crystalline aromatic polyester (A1) having an acid value of greater than 2 mg-KOH/g, if used as the crystalline aromatic polyester (A), is reacted with a lactone (B1); and a crystalline aromatic polyester (A2) having an acid value of 2 mg-KOH/g or less, if used as the crystalline aromatic polyester (A), is reacted with a lactone composition (B2). The lactone composition (B2) has only to be a composition containing a lactone (B1), but is preferably a composition containing the lactone (B1) and a phosphorous ester compound (C), is more preferably a composition further containing at least one selected from the group consisting of acidic phosphoric esters (D) and tin compounds (E) in addition to the lactone (B1) and the phosphorous ester compound (C), and is further preferably a composition further containing at least one acidic phosphoric ester (D) and at least one tin compound (E). When a crystalline aromatic polyester (A2) having an acid value of 2 mg-KOH/g or less is used, transesterification between the crystalline aromatic polyester component and a polyester component derived from the lactone may proceed, to give a polyester block copolymer being insufficient in melting point, hue, and/or thermal stability or to lower the polymerization rate (polymerization speed). In this case, feeding a phosphorous ester compound (C) with or without an acidic phosphoric ester (D) to the reaction system suppresses the transesterification and maintains the crystallinity of the crystalline aromatic polyester, to thereby give a polyester block copolymer that has a high melting point and is superior in hue and thermal stability. Feeding a tin compound (E) to the reaction system helps a desired polymerization reaction to proceed smoothly, to thereby give a polyester block copolymer that is superior typically in thermal stability.

### [Lactone (B1) or Lactone Composition (B2)]

Exemplary lactones (B1) include ε-caprolactone; methylated (ε-caprolactone)s such as 2-methyl-ε-caprolactone, 4-methyl-ε-caprolactone, and 4,4-dimethyl-ε-caprolactone; δ-valerolactone; methylated (δ-valerolactone)s; and β-propiolactone. Each of different lactones (B1) may be used alone or in combination.

Among them, ε-caprolactone is most preferred as a lactone (B1) in consideration of the cost and properties of the resulting polyester block copolymer. More preferably, ε-caprolactone is used in an amount of 60 percent by mole or more, and further preferably used in an amount of 80 percent by mole or more, of the total lactones (B1).

The feeding ratio [(A)/((B1) or (B2))] of the crystalline aromatic polyester (A) to the lactone (B1) or lactone composition (B2) is not particularly limited, but the ratio in terms of weight ratio is preferably 90/10 to 35/65, and more preferably 85/15 to 40/60.

The polymerization reaction may be carried out by the catalysis of a ring-opening polymerization catalyst. Esterification catalysts generally used in the synthesis of polyesters can be used as ring-opening polymerization catalysts. Exemplary catalysts include metals such as tin, zinc, lead, titanium, bismuth, zirconium, and germanium; and compounds containing these metals, such as organometallic compounds, as well as carbonates, oxides, and halides of the metals. Among them, tin compounds are most preferred in consideration typically of properties of the resulting polyester block copolymer.

### [Phosphorous Ester Compound (C)]

Phosphorous ester compounds (C) are not particularly limited, as long as being phosphorous ester compounds each having one or more phosphorus atoms per molecule. Exemplary preferred phosphorous ester compounds (C) include bis(2,6-di-t-butyl-4-methylphenyl)pentaerythritol di-phosphite, bis(2,4-di-t-butylphenyl)pentaerythritol di-phosphite, tris(2,4-di-t-butylphenyl)phosphite, tris(mono- or di-nonylphenyl)phosphite, tris(monononylphenyl)phosphite, and tris(isodecyl)phosphite.

The amount of phosphorous ester compounds (C) to be fed is, for example, from 0.0001 to 0.3 part by weight, and preferably from 0.001 to 0.05 part by weight, to 100 parts by weight of the total amount of the crystalline aromatic polyester (A) and the lactone composition (B1). Phosphorous ester compounds (C), if fed in an amount of less than 0.0001 part by weight, may not sufficiently help to suppress the transesterification. In this case, when a crystalline aromatic polyester (A2) having an acid value of 2 mg-KOH/g or less is used as the crystalline aromatic polyester (A), the resulting polyester block copolymer may have a low melting point and may have insufficient hue and/or thermal stability. In contrast, phosphorous ester compounds (C), if fed in an amount of more than 0.3 part by weight, may cause insufficient hydrolysis resistance of the polyester block copolymer.

### [Acidic Phosphoric Ester (D)]

Acidic phosphoric esters (D) are not particularly limited, as long as being acidic phosphoric ester compounds each having one or more phosphorus atoms per molecule. Exemplary preferred acidic phosphoric esters (D) include methyl acid phosphate, butyl acid phosphate, dibutyl phosphate, monobutyl phosphate, 2-ethylhexyl acid phosphate, bis(2-ethylhexyl)phosphate, isodecyl acid phosphate, and monoisodecyl phosphate.

The amount of acidic phosphoric esters (D) to be fed is, for example, from 0.0001 to 0.03 part by weight, and preferably from 0.001 to 0.01 part by weight, to 100 parts by weight of the total of the crystalline aromatic polyester (A) and the lactone composition (B1). Acidic phosphoric esters (D), if fed in an amount of 0.0001 part by weight, may not sufficiently help to suppress the transesterification, and, when a crystalline aromatic polyester (A2) having an acid value of 2 mg-KOH/g or less is used as the crystalline aromatic polyester (A), the resulting polyester block copolymer may have a low melting point and may have insufficient hue and/or thermal stability. In contrast, acidic phosphoric esters (D), if fed in an amount of more than 0.01 part by weight, may cause insufficient hydrolysis resistance of the polyester block copolymer.

### [Tin Compound (E)]

Tin compounds (E) are not particularly limited, as long as being compounds each having one or more tin atoms per molecule. Exemplary preferred tin compounds (E) include inorganic tin compounds including tin halides such as stannous chloride, stannous bromide, and stannous iodide; and organic tin compounds including tin carboxylates such as tin 2-ethylhexanoate, and dibutyltin oxide.

The amount of tin compounds (E) to be fed is, for example, from 0.0001 to 0.6 part by weight, and preferably from 0.002 to 0.1 part by weight, to 100 parts by weight of the total of the crystalline aromatic polyester (A) and the lactone composition (B1). When tin compounds (E) are used in combination with acidic phosphoric esters (D), the amount of tin compounds (E) is, for example, from 1 to 20 parts by weight, and preferably from 2 to 10 parts by weight, to 1 part by weight of the acidic phosphoric esters (D). When a crystalline aromatic polyester (A2) having an acid value of 2 mg-KOH/g or less is used as the crystalline aromatic polyester (A), tin compounds (E), if fed in an excessively small amount, may reduce the polymerization rate and prolong the reaction time to yield a polyester block copolymer. In contrast, tin compounds (E), if fed in an excessively large amount, may cause insufficient hydrolysis resistance of the polyester block copolymer. In this case, additionally, polymer formation may occur before the lactone composition (B2) is fed into the static mixer, and this may impede the production of the target polyester block copolymer.

Lactides may be subjected to a polymerization reaction, in addition to the crystalline aromatic polyester (A) and the lactone (B1) or lactone composition (B2). The amount of lactides is, for example, 0 to 50 parts by weight, preferably 0 to 20 parts by weight, and more preferably 0 to 5 parts by weight, to 100 parts by weight of the total of the crystalline aromatic polyester (A) and the lactone (B1) or lactone composition (B2).

Solvents may be used in the polymerization reaction, but, even in the absence of solvents, the reaction can be carried out according to the present invention reliably uniformly at a constant copolymerization ratio and a constant reaction rate, and this enables continuous production of a polyester block copolymer with constant quality.

The polymerization temperature may be selected appropriately according typically to the types and charging ratio of the crystalline aromatic polyester (A) and the lactone (B1) or lactone composition (B2), but it is generally from about 200°C to about 300°C, and preferably from about 210°C to about 270°C. The residence time in the static mixer may be selected appropriately according typically to the types and charging ratio of the crystalline aromatic polyester (A) and the lactone (B1) or lactone composition (B2), but it is generally from about 10 minutes to about 180 minutes, and preferably from about 60 minutes to about 120 minutes.

Next, devices for use in the present invention will be illustrated in detail below, which, however, are not limitative. Static mixers for use in the present invention are motionless mixers using no driving unit and each having mixing impellers called mixing elements arranged in series in a tube or duct. The respective mixing elements may be the same as or different from each other in their shapes. Mixing elements having identical shapes but different inner diameters may also be arranged. Mixing elements may be arranged so that each element is rotated with respect to an adjacent element at a predetermined angle (e.g., 90 degrees). Such mixing elements may be categorized by the shape typically into spiral-shape elements and status-shape elements. The mixing elements help to divide, reverse, and/or shift the flow to thereby mix the fluid (reaction mixture).

Static mixers for use herein are not particularly limited, but exemplary static mixers include Kenics static mixers, "SMX" and "SMXL" Sulzer mixers, and static mixers of Toray style. Two or more static mixers may be connected and used herein.

According to the present invention, a molten crystalline aromatic polyester (A) is continuously fed through a gear pump into a static mixer at a constant rate. To provide quantitative feeding, the inlet pressure of the gear pump is maintained. A pressure may be applied, for example, by a process of connecting between an extruder and the gear pump via a pipe equipped with a pressure gauge, and controlling the number of revolutions of the extruder so as maintain the pipe pressure constant. In this process, the inlet pressure of the gear pump is preferably 0.0098 MPa (gauge pressure) or more, more preferably from 0.0098 MPa (gauge pressure) to 0.98 MPa (gauge pressure), and particularly preferably from 0.098 MPa (gauge pressure) to 0.49 MPa (gauge pressure). The crystalline aromatic polyester, if fed at an inlet pressure of the gear pump of less than 0.0098 MPa (gauge pressure), may not be fed stably, and this may impede continuous production of a polyester block copolymer with constant quality.

According to the present invention, a lactone (B1) or a lactone composition (B2) is continuously fed through a metering pump into the static mixture at a constant rate. To mix with the molten crystalline aromatic polyester (A) sufficiently, the charge pressure of this component is maintained. The charge pressure is maintained, for example, by a process of providing an injection valve between the metering pump (e.g., a plunger pump) and the static mixer. In this process, the set pressure of the injection valve [the charge pressure of the lactone (B1) or lactone composition (B2)] is preferably 1.96 MPa (gauge pressure) or more, more preferably from 1.96 MPa (gauge pressure) to 25.48 MPa (gauge pressure), and particularly preferably from 7.84 MPa (gauge pressure) to 21.56 MPa (gauge pressure). At a pressure of the injection valve of less than 1.96 MPa (gauge pressure), the crystalline aromatic polyester may not be stably mixed with the lactone [lactone (B1) or lactone composition (B2)], and this may impede continuous production of a polyester block copolymer with constant quality.

The product polyester block copolymers are usable as materials typically for fibers, molded articles, and films. Examples

The present invention will be illustrated in further detail with reference to several examples below. It should be noted, however, these examples are never construed to limit the scope of the present invention. In the following examples, melt indices (MI) and melting points were measured in the following manner.

### (1) Melt Index (MI)

The melt index (in unit of g/10 min) was measured at 230°C with a weight of 2.160 kg.

### (2) Melting Point

A melting peak temperature was measured with a difference scanning calorimeter according to Japanese Industrial Standards (JIS) K 7121, and this was defined as the melting point (in unit of °C).

### (3) Acid Value

A sample was dried at 120°C for five hours, about 1.0 g of the dried sample was weighed, and dissolved in 50 g of benzyl alcohol by heating at 160°C for one hour. After cooling with water, the solution was combined with 50 of chloroform, and titration of the mixture was conducted with a 1/10 N potassium hydroxide solution in ethanol using phenolphthalein as an indicator, to give an acid value. The acid value of the sample was determined by subtracting acid values of benzyl alcohol and the chloroform mixture separately measured from the above-measured acid value.

### PREPARATION EXAMPLE 1

A lactone composition (a mixture mainly containing ε-caprolactone) was prepared by mixing 1000 parts by weight of ε-caprolactone (CLM), 1.25 parts by weight of a phosphorous ester (supplied by ADEKA CORPORATION under the trade name of "Adekastab PEP-30"), 0.13 part by weight of an acidic phosphoric ester (supplied by Daihachi Chemical Industry Co., Ltd. under the trade name of "AP-4"), and 0.25 part by weight of a tin compound (supplied by Nitto Kasei Co, Ltd. under the trade name of "GHA-105").

### EXAMPLES 1 to 5

A series of polyester block copolymers was continuously prepared by melting a poly(butylene terephthalate) (PBT; having a melting point of 228°C, a number-average molecular weight of 30,000, and an acid value of 2.6 mg-KOH/g) in a single-screw extruder; feeding the molten poly(butylene terephthalate) through a gear pump into a static mixer (supplied by Sulzer under the trade name of "SMXL"; having an inner diameter of 3.8 cm and a length of 798 cm and including 72 mixing elements) at a constant rate, and feeding ε-caprolactone (CLM) through a plunger pump into the static mixer at a constant rate. A reaction was conducted at a temperature of 235°C, an inlet pressure of the gear pump of 0.196 MPa (gauge pressure), and a charge pressure of ε-caprolactone of 15.68 MPa (gauge pressure). The polyester block copolymers were discharged from the static mixer and pelletized, from which samples were taken every 15 minutes, and properties thereof were measured. The results are shown in Table 1. Table 1 demonstrates that these samples show very small variations in melt index (MI) and melting point.

### COMPARATIVE EXAMPLE 1

A polyester block copolymer was continuously prepared by feeding and mixing a poly(butylene terephthalate) (PBT; having a melting point of 228°C, a number-average molecular weight of 30, 000, and an acid value of 2.6 mg-KOH/g) with a constant-rate feeder at a rate of 3 kg/hr and ε-caprolactone (CLM) through a plunger pump at a rate of 2 kg/hr to a double-screw extruder at a temperature of 260°C; and feeding the mixture through a gear pump set at a constant rate into a static mixer (supplied by Sulzer under the trade name of "SMXL"; having an inner diameter of 3.8 cm and a length of 798 cm and including 72 mixing elements). A reaction was conducted at a temperature of 235°C. The polyester block copolymer was discharged from the static mixer and pelletized, from which samples were taken every 15 minutes, and properties thereof were measured. The results are shown in Table 1. Table 1 demonstrates that these samples show large variations in melt index (MI) and melting point.

### COMPARATIVE EXAMPLE 2

A polyester block copolymer was continuously prepared by intermittently feeding and mixing 60 parts by weight of a poly(butylene terephthalate) (PBT; having a melting point of 228°C, a number-average molecular weight of 30, 000, and an acid value of 2.6 mg-KOH/g) and 40 parts by weight of ε-caprolactone (CLM) into a complete mixing tank at a temperature of 235°C; and feeding the mixture through a gear pump set at a constant rate into a static mixer (supplied by Sulzer under the trade name of "SMXL"; having an inner diameter of 3.8 cm and a length of 798 cm and including 72 mixing elements). A reaction was conducted at a temperature of 235°C. The polyester block copolymer was discharged from the static mixer and pelletized, from which samples were taken every 15 minutes, and properties thereof were measured. The results are shown in Table 1. Table 1 demonstrates that these samples show large variations in melt index (MI) and melting point.

### EXAMPLES 6 to 10

A series of polyester block copolymers was continuously prepared by melting a poly (butylene terephthalate) (PBT; having a melting point of 228°C, a number-average molecular weight of 35,000, and an acid value of 0.8 mg-KOH/g) in a single-screw extruder; feeding the molten poly(butylene terephthalate) through a gear pump into a static mixer (supplied by Sulzer under the trade name of "SMXL"; having an inner diameter of 3.8 cm and a length of 798 cm and including 72 mixing elements) at a constant rate; and feeding the lactone composition (mixture mainly containing ε-caprolactone (CLM)), prepared in Preparation Example 1, through a plunger pump into the static mixer at a constant rate. A reaction was conducted at a temperature of 235°C, an inlet pressure of the gear pump of 0.196 MPa (gauge pressure), and a charge pressure of ε-caprolactone of 15.68 MPa (gauge pressure). The polyester block copolymers were discharged from the static mixer and pelletized, from which samples were taken every 15 minutes, and properties thereof were measured. The results are shown in Table 2. Table 2 demonstrates that these samples show very small variations in melt index (MI) and melting point.

### EXAMPLE 11

A polyester block copolymer was continuously prepared by melting a poly(butylene terephthalate) (PBT; having a melting point of 228°C, a number-average molecular weight of 35, 000, and an acid value of 0.8 mg-KOH/g) in a single-screw extruder; feeding the molten poly (butylene terephthalate) through a gear pump into a static mixer (supplied by Sulzer under the trade name of "SMXL"; having an inner diameter of 3.8 cm and a length of 798 cm and including 72 mixing elements) at a constant rate; and feeding ε-caprolactone (CLM) through a plunger pump into the static mixer at a constant rate. A reaction was conducted at a temperature of 235°C, an inlet pressure of the gear pump of 0.196 MPa (gauge pressure), and a charge pressure of ε-caprolactone of 15.68 MPa (gauge pressure). The polyester block copolymer was discharged from the static mixer and pelletized, from which samples were taken every 15 minutes, and properties thereof were measured. The results are shown in Table 2. Table 2 demonstrates that these samples show very small variations in melt index (MI) and melting point. The polyester block copolymer prepared herein had a melting point lower than that of the polyester block copolymer prepared according to Example 6, in which the polyester block copolymer was prepared by the procedure of Example 11, except for using the lactone composition prepared in Preparation Example 1 instead of ε-caprolactone (CLM).

[Table 1]

**TABLE 1**

| | Charge rate | | Sampling 15 min. later | | Sampling 30 min. later | | Sampling 45 min. later | | Sampling 60 min. later | |
|---|---|---|---|---|---|---|---|---|---|---|
| | PBT | CLM | MI | Melting point | MI | Melting point | MI | Melting point | MI | Melting point |
| | kg/hr | kg/hr | g/10 min. | °C | g/10 min. | °C | g/10 min. | °C | g/10 min. | °C |
| Example 1 | 3 | 2 | 12 | 202 | 13 | 202 | 12 | 201 | 12 | 201 |
| Example 2 | 3.5 | 1.5 | 14 | 209 | 13 | 208 | 13 | 209 | 13 | 209 |
| Example 3 | 4 | 1 | 15 | 212 | 18 | 212 | 16 | 213 | 16 | 212 |
| Example 4 | 2.5 | 2.5 | 10 | 196 | 10 | 196 | 10 | 196 | 10 | 196 |
| Example 5 | 2 | 3 | 8 | 190 | 10 | 188 | 8 | 189 | 10 | 188 |
| Com. Ex. 1 | 3 | 2 | 12 | 198 | 15 | 206 | 17 | 207 | 12 | 197 |
| Com. Ex. 2 | 3 | 2 | 12 | 208 | 17 | 198 | 13 | 208 | 15 | 200 |

[Table 2]

**TABLE 2**

| | Charge rate | | Sampling 15 min. later | | Sampling 30 min. later | | Sampling 45 min. later | | Sampling 60 min. later | |
|---|---|---|---|---|---|---|---|---|---|---|
| | PBT | Lactone composition | MI | Melting point | MI | Melting point | MI | Melting point | MI | Melting point |
| | kg/hr | kg/hr | g/10 min. | °C | g/10 min. | °C | g/10 min. | °C | g/10 min. | °C |
| Example 6 | 3 | 2 | 6 | 201 | 7 | 202 | 6 | 201 | 6 | 201 |
| Example 7 | 3.5 | 1.5 | 7 | 210 | 8 | 210 | 8 | 210 | 8 | 210 |
| Example 8 | 4 | 1 | 9 | 213 | 8 | 212 | 8 | 213 | 8 | 212 |
| Example 9 | 2.5 | 2.5 | 5 | 196 | 5 | 196 | 5 | 196 | 6 | 196 |
| Example 10 | 2 | 3 | 5 | 188 | 4 | 190 | 5 | 189 | 5 | 188 |
| Example 11 | 3 | 2 (CLM) | 8 | 165 | 8 | 164 | 7 | 165 | 7 | 165 |

### Industrial Applicability

According to the production method of the present invention, polyester block copolymers with constant quality can be industrially efficiently produced through the reaction of crystalline aromatic polyesters with lactones.

## Claims

1. A method for producing a polyester block copolymer, the method comprising the steps of continuously feeding a molten crystalline aromatic polyester (A) through a gear pump and a lactone (B1) or a lactone composition (B2) through a metering pump into a static mixer respectively at constant rates; and carrying out a reaction between the two components to give the polyester block copolymer.

2. The method for producing a polyester block copolymer according to claim 1, wherein a crystalline aromatic polyester (A1) having an acid value of greater than 2 mg-KOH/g is reacted with the lactone (B1).

3. The method for producing a polyester block copolymer according to claim 1, wherein a crystalline aromatic polyester (A2) having an acid value of 2 mg-KOH/g or less is reacted with the lactone composition (B2).

4. The method for producing a polyester block copolymer according to claim 3, wherein the lactone composition (B2) comprises a lactone (B1) and a phosphorous ester compound (C).

5. The method for producing a polyester block copolymer according to claim 4, wherein the lactone composition (B2) further comprises at least one compound selected from the group consisting of acidic phosphoric esters (D) and tin compounds (E).

6. The method for producing a polyester block copolymer according to any one of claims 1 to 5, wherein the crystalline aromatic polyester (A) is fed so as to give an inlet pressure of the gear pump of 0.0098 MPa (gauge pressure) or more.

7. The method for producing a polyester block copolymer according to any one of claims 1 to 6, wherein the charge pressure of the lactone (B1) or the lactone composition (B2) is controlled to be 1.96 MPa (gauge pressure) or more.
